# EUROPEAN PATENT SPECIFICATION

(11) **EP 1 737 171 B1**
(45) Date of publication and mention of the grant of the patent: **27.10.2010**
(21) Application number: 06012689.3
(22) Date of filing: 20.06.2006
(51) Int. Cl.: H04L 12/58

(54) **Mail server and method for transmitting electronic mail**
Emailserver und Verfahren zur Übertragung von Emails
Serveur des messages éléctroniques et procédé de transmission des messages éléctroniques.

(30) Priority: 22.06.2005 JP 2005182601
(43) Date of publication of application: 27.12.2006
(73) Proprietor: NTT DoCoMo, Inc., Chiyoda-ku Tokyo 100-6150 (JP)
(72) Inventor: Okada, Takeshi Int.Prop.Dept, NTT DoCoMo, Inc., Chiyoda-ku Tokyo 100-6150 (JP); Fukuyoshi, Akiko Int.Prop.Dept, NTT DoCoMo, Inc., Chiyoda-ku Tokyo 100-6150 (JP); Ito, Sayuri Int.Prop.Dept, NTT DoCoMo, Inc., Chiyoda-ku Tokyo 100-6150 (JP)
(74) Representative: HOFFMANN EITLE

(56) References cited:
- EP-A- 0 950 969
- EP-A- 1 164 757
- US-A1- 2002 016 818

## Description

### BACKGROUND

### TECHNICAL FIELD

The present invention relates to transmission of an electronic mail with image data.

### RELATED ART

In US 2002/0016818 A1 there is described an e-mail system that re-packages message attachments optimized for delivery to wireless handheld devices. There is provided an optimization of the e-mail deliveries to allow for the recipients to receive e-mail attachments at a time and in a size/format as desired. There is executed a comparison of the size of the attached images to the capabilities of the type of the recipient client device, and delivery is pre-emptied of the original format of those attached if they are determined to be burdensome or overwhelming. In cases wherein these attachments would strain the capabilities of the recipient devices wireless bandwidth devices and/or display features, the original attachments are removed from the message and do not accompany the e-mail delivery.

Further, generally, a mobile communication terminal has smaller display capability compared with, for example, a desk-top personal computer because the mobile communication terminal is required to be small and light. In recent years, some mobile communication terminals have higher display capability than the prior mobile communication terminals. Thus, there is a difference in the display capability between various models of mobile communication terminals. Under the present situation, it is required that the size of image data be changed according to the model of the mobile communication terminal. For example, JP-A-2003-162476 discloses converting data size and data format of image data in response to the model of the mobile terminal.

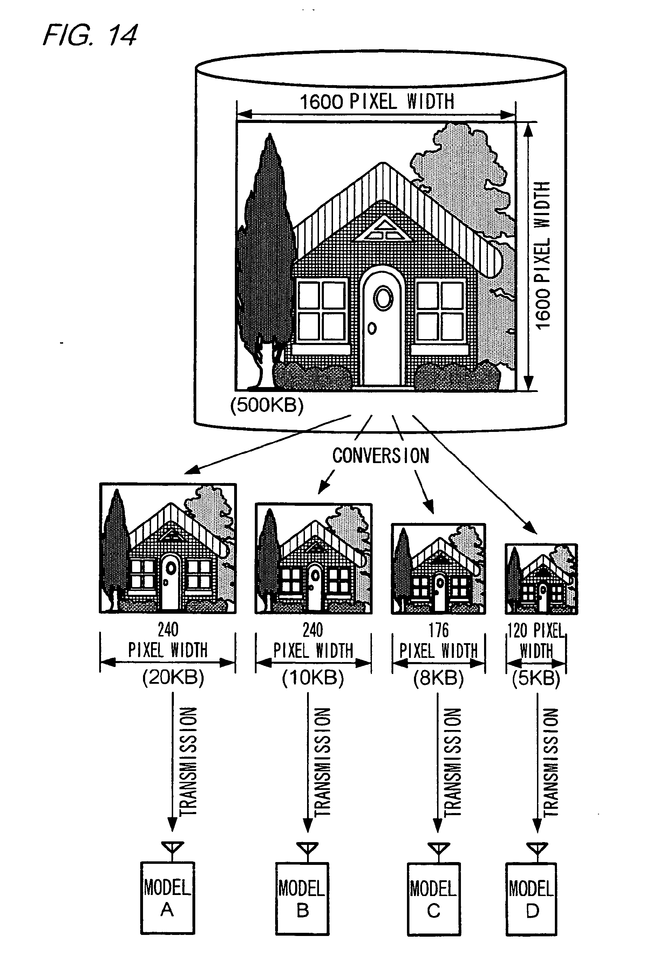

In recent years, a service has been developed by which electronic mail with image data can be communicated between two mobile communication terminals, or between a mobile communication terminal and a personal computer. Depending on the type of service offered, the data size and width of image data is converted according to the model of a destination mobile communication terminal before being transmitted to the destination mobile communication terminal. The related art is described with reference to FIG. 14.

FIG. 14 provides an example of image data attached to an electronic mail. The original image size is 1600 pixels x 1600 pixels and the data size is 500 kB (kilo bytes). When receiving an electronic mail with image data, a mail server divides the received data into electronic mail and image data. Then, the mail server transmits to a mobile communication terminal only the electronic mail. The mail server adds to the electronic mail a storage address, specifically, a URL (Uniform Resource Locator), of the image data. When a user of the mobile communication terminal operates the mobile communication terminal to access the URL described in the electronic mail, the mobile communication terminal transmits an HTTP (Hypertext Transfer Protocol) request. The header of the HTTP request includes a User Agent Field in which information of the model is written.

When receiving the HTTP request, the mail server determines the model of the source mobile communication terminal with reference to the User Agent Field. Then, the mail server generates image data having a data size that matches the capability of the model. For example, if a mobile communication terminal is model A, the mobile communication terminal converts the original image data (having a data size of 500 kB) into image data having image size of 240 pixel width and data size of 20 kB. In another example, if the mobile communication terminal is model B, the mobile communication terminal converts the original image data into image data having an image size of 240 pixel width and a data size of 10 kB. In another example, if the mobile communication terminal is model C, the mobile communication terminal converts the original image data into image data having an image size of 176 pixel width and data size of 8 kB. In another example, if the mobile communication terminal is model D, the mobile communication terminal converts the original image data into image data having an image size of 120 pixel width and data size of 5 kB, and so on. It is to be noted that the height of the image is not determined because a typical mobile communication terminal can display an image by scrolling vertically.

The mail server transmits the converted image data to the mobile communication terminal as an HTTP response. The mobile communication terminal receives the image data and displays an image in accordance with the image data.

### SUMMARY

According to JP-A-2003-162476, the mail server stores the original image data having an original data size. For example, although the maximum data size required to be transmitted to a mobile communication terminal is 20 kB, the mail server stores image data of 500 kB, which is an unnecessarily large size for an image data. In the above case, there arises a problem in that, the mail server requires a large storage capacity.

An advantage of the present invention is that it can provide a mail server that can store image data efficiently.

The present invention provides a mail server, comprising the features of claim 1.

It is preferred that the first storage means further stores at least one image quality level corresponding to the model, the data size corresponding to the image quality level; the mail server further includes third storage means that stores a mail address of a mobile communication terminal, a model identifier showing a model of the mobile communication terminal, and an image quality level corresponding to the mail address; the mail server further includes a first extracting means that extracts from the third storage means a reference model identifier and a reference image quality level, the reference model identifier and the reference image quality level corresponding to the mail address included in the electronic mail; the mail server further includes a second extracting means that extracts from the first storage means the reference data size, the reference data size being a data size corresponding to the target model identifier and the target image quality level; the first determining means further determines a target image quality level, the target image quality level corresponding to the target model; and the second determining means further determines a target data size, the target data size corresponding to the target model and the target image quality level.

It is preferred that the mail server further comprises updating means that updates the image quality level stored in the third storage means with an image quality level transmitted from the destination mobile communication terminal when the target data size is larger than the data size of the original image data or intermediate image data.

It is preferred that the electronic mail includes a plurality of mail addresses as destinations; the first extracting means extracts a plurality of models and image quality levels, each of which corresponds to one of a plurality of mail addresses; and the second extracting means extracts the largest data size among data sizes corresponding to a plurality of models and image quality levels extracted by the first extracting means.

It is preferred that the first storage means further stores an image size corresponding to the model; the intermediate image data has a predetermined image size; the first determining means further determines a target image size, the target image size corresponding to the target model; and the final image data has a data size approximately equal to the target image size.

It is preferred that the mail server further comprises cache storage means that stores the final image data, wherein the image transmitting means transmits the final image data stored in the cache storage means in a case that the image data to be transmitted to the destination mobile communication terminal is stored in the cache storage means.

The present invention also provides a method for transmitting an electronic mail by a mail server including first storage means that stores a model identifier and a data size corresponding to the model, the model identifier showing a model of a mobile communication terminal, the method comprising the features of claim 7.

### BRIEF DESCRIPTION OF THE DRAWINGS

Embodiments of the present invention will be described in detail based on the following figures, wherein:
FIG. 1 shows an outline of the first embodiment;
FIG. 2 shows a block diagram illustrating a system configuration in accordance with the first embodiment;
FIG. 3 shows a block diagram illustrating a configuration of a mail server;
FIG. 4 shows an example of a conversion table in accordance with the first embodiment;
FIG. 5 shows a flowchart illustrating operations of the mail server in accordance with the first embodiment;
FIG. 6 shows a flow chart illustrating an operation of the mail server in accordance with the first embodiment;
FIG. 7 shows a flow chart illustrating an operation of the mail server in accordance with the first embodiment;
FIG. 8 shows an example of a screen showing electronic mail;
FIG. 9 shows a block diagram illustrating a configuration of a mail server in accordance with the second embodiment;
FIG. 10 shows an example of a conversion table in accordance with the second embodiment;
FIG. 11 shows an example of a terminal profile table;
FIG. 12 shows a flow chart illustrating an operation of the mail server in accordance with the second embodiment;
FIG. 13 shows a flow chart illustrating an operation of the mail server in accordance with the second embodiment; and
FIG. 14 shows an outline of the related art.

### DESCRIPTION OF THE PREFERRED EMBODIMENTS

### 1. First Embodiment

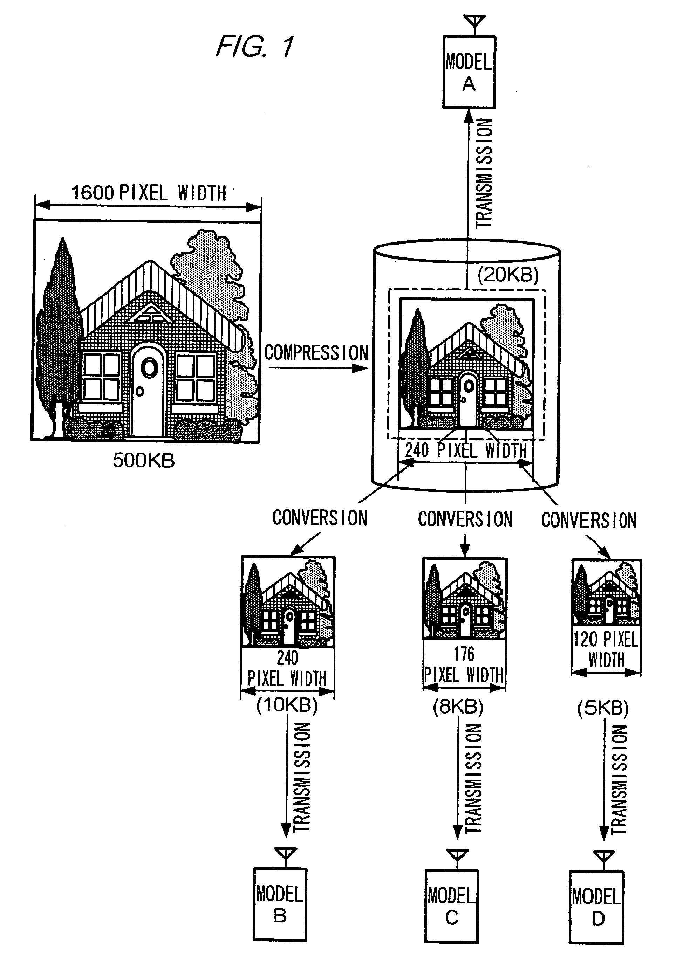

FIG. 1 shows an outline of the first embodiment. In the first embodiment, a mail server stores not an original image data but an intermediate image data having a reference data size, in response to the data size of the original image data. The "reference data size" is a predetermined constant in the first embodiment and is the largest data size among data sizes available in the models of mobile communication terminals. In an example of FIG. 1, the data size of image data available in model A is 20 kB, that in model B is 10 kB, that in model C is 8 kB, and that in model D is 5 kB. Therefore, the largest data size available in the models of the mobile communication terminal having possibilities of being a destination of an electronic mail, is 20 kB. The mail server stores intermediate image data that is generated on the basis of the original image data and has a data size of 20 kB.

According to the present embodiment, the mail server can transmit to model A the intermediate image data, because the data size of the intermediate image data is equal to the data size corresponding to model A. Also, the mail server can transmit to model B, C, or D the image data after converting the intermediate image data into a final image data having a data size of 10 kB, 8 kB, or 5 kB. As described above, the mail server can perform a two-stage conversion of image data. In the first stage conversion, the mail server can efficiently use its storage area.

In general, a processing time required for converting (or changing) a data size of an image data depends on a difference between image sizes before and after the conversion. For example, since the difference in conversion shown in FIG. 1 is smaller than that shown in FIG. 14, the processing time in FIG. 1 is shorter than that shown in FIG. 14. Specifically, in an example shown in FIG. 1, the conversion is performed from 240 pixels width (20 kB) of intermediate image data into 240 pixels width (10 kB), 176 pixels width (8 kB), or 120 pixels width (5 kB) of image data. In an example shown in FIG. 14, the conversion is performed from 1600 pixels width (500 kB) of intermediate image data into 240 pixels width (10 kB), 176 pixels width (8 kB), or 120 pixels width (5 kB) of image data. As a result of experiments, it was found that the conversion in FIG. 1 costs approximately 10 msec while the conversion in FIG. 14 costs approximately 1000-5000 msec. Thus, the present embodiment provides a significant reduction in the processing time of the conversion.

### 1-1. Configuration

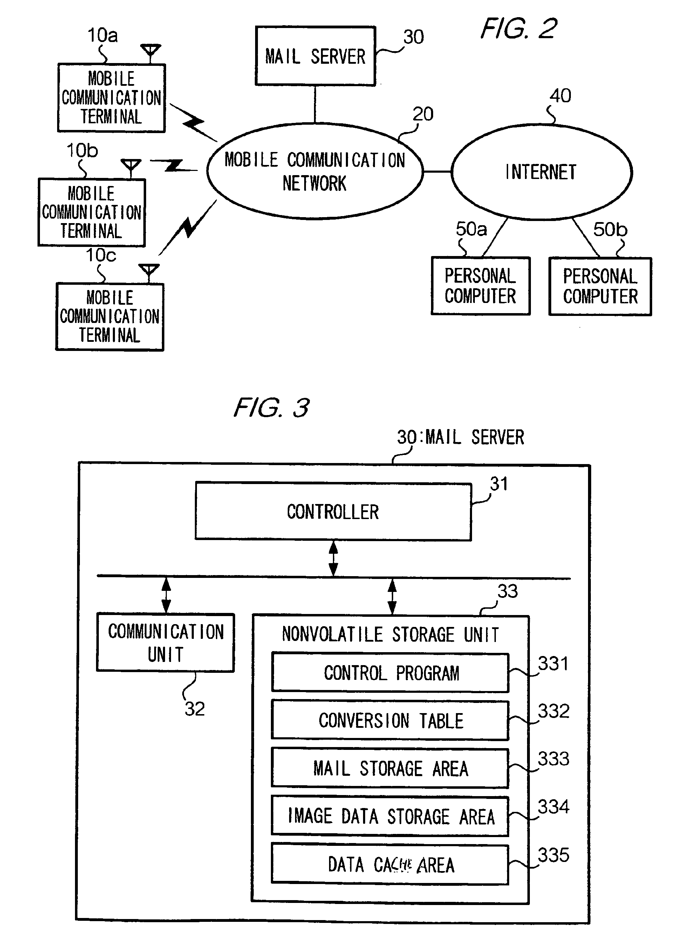

FIG. 2 shows a block diagram illustrating a system configuration in accordance with the first embodiment. As shown in FIG. 2, the system includes mobile communication terminals 10a-10c, a mobile communication network 20, a mail server 30, the Internet 40, and personal computers 50a and 50B. The mobile communication terminals 10a-10c are wireless communication terminals in accordance with, for example, PDC (Personal Digital Cellular) or IMT-2000 (International Mobile Telecommunication-2000). The models of the mobile communication terminals 10a-10c are different from each other. The mobile communication network includes communication devices for providing data communication service and voice communication service to the mobile communication terminals 10a-10c. In an example shown in FIG. 2, the mobile communication network 20 includes communication devices conforming to PDC and communication devices conforming to IMT-2000.

The mail server 30 is connected to the mobile communication network 20. The mobile communication network 20 is connected to the Internet 40 via a gateway server (not shown in the figures). The personal computers 50a and 50b are connected to the Internet 40. Each of the mobile communication terminals 10a-10c, personal computers 50a and 50b has an electronic mail address. Each of the mobile communication terminals 10a-10c, personal computers 50a and 50b functions as a mail client using the mail address. The personal computers 50a and 50b can process a larger size of image data than the mobile communication terminal so as to transmit to a mobile communication terminal an electronic mail with an attachment of an image data having a large data size, for example, 500 kB.

Although the system includes three mobile communication terminals and two personal computers in FIG. 2, the system may include more mobile communication terminals and personal computers than shown in FIG. 2. In the following descriptions, the mobile communication terminals 10a-10c are referred to as mobile communication terminal(s) 10 except in cases where it is necessary to identify each of the mobile communication terminals. Similarly, the personal computers 50a and 50b are referred to as personal computer(s) 50.

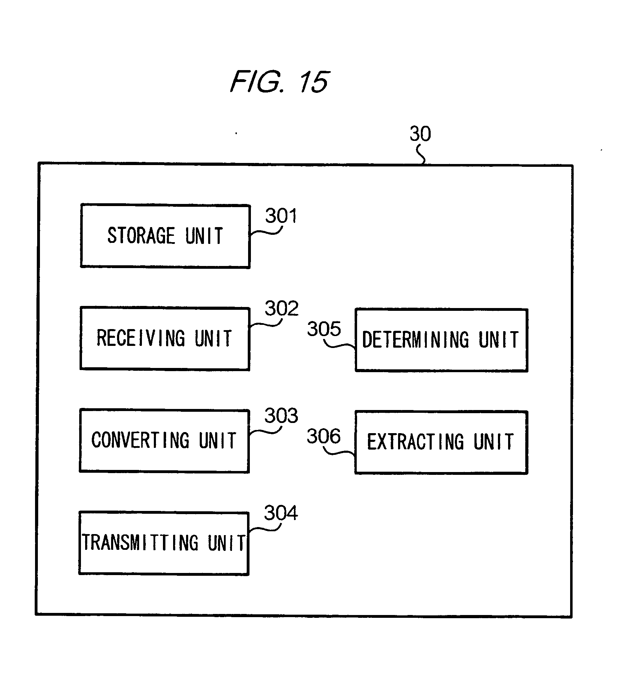

FIG. 15 shows a block diagram illustrating a functional configuration of the mail server 30. A storage unit 301 stores various data and programs. A receiving unit 302 receives an electronic mail and original image data. A converting unit 303 converts the original image data into intermediate image data. A transmitting means transmits to the destination mobile communication terminal the electronic mail stored in the storage unit. A determining unit 305 determines a target model on the basis of a model identifier transmitted from the destination mobile communication terminal. The determining unit 305 also determines a target data size corresponding to the target model. The converting unit 303 also converts the original image data or the intermediate image data into final image data when the target data size satisfies a predetermined condition. The transmitting means also transmits image data to the destination mobile communication terminal. An extracting unit 306 extracts from the storage unit 301 a reference model identifier and a reference image quality level.

FIG. 3 shows a block diagram illustrating a hardware configuration of the mail server 30. As shown in FIG. 3, the mail server 30 has a controller 31, a communication unit 32, and a nonvolatile storage unit 33. The controller 31 includes, for example, a processor such as a CPU (Central Processing Unit) and a memory such as a ROM (Read Only Memory) and a RAM (Random Access Memory). The controller 31 controls the elements of the mail server 30 by executing a computer program stored in the memory or the nonvolatile storage unit 33. The communication unit 32 includes a network interface and a communication controller circuit (not shown in the figures). The communication unit 32 performs data communication via the mobile communication network 20 under the control of the controller 31.

The nonvolatile storage unit 33 includes a large capacity storage device such as a hard disk drive. The nonvolatile storage unit 33 stores a control program 331 and a conversion table 332. The control program 331 includes a program describing procedures for providing electronic mail services. The conversion table 332 includes at least one condition for converting image data. The nonvolatile storage unit 33 has a plurality of storage area, for example, a mail storage area 333 for storing electronic mail designated to the mobile communication terminal 10, an image data storage area 334 for storing image data attached to the electronic mail, and a data cache area 335 for temporally storing the converted image data transmitted to the mobile communication terminal 10. By executing the control program, the mail server 30 has functions shown in FIG. 15.

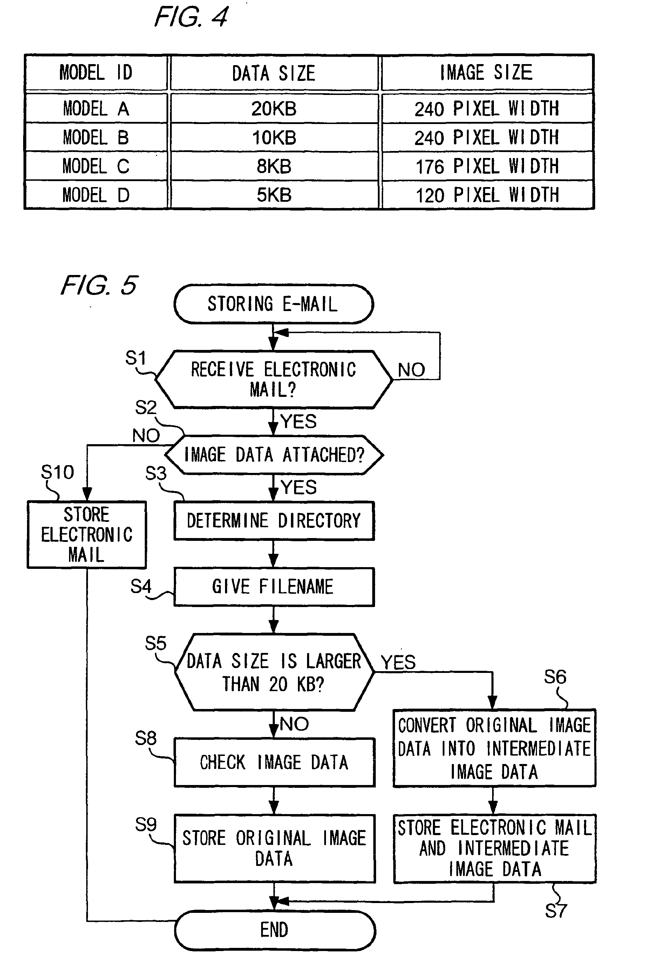

FIG. 4 shows an example of the conversion table 332. As shown in FIG. 4, the conversion table 332 includes a model identifier showing a model of a mobile communication terminal, a corresponding data size of image data, and a corresponding image size (width) of the image. It is to be noted that the height of the image is not determined in the table because a typical mobile communication terminal can display an image by scrolling vertically or horizontally. The conversion table 332 may include a corresponding height of the image. In an example shown in FIG. 4, data size "20 kB" and image size "240 pixels" correspond to "model A", data size "10 kB" and image size "240 pixels" correspond to "model B", data size "8 kB" and image size "176 pixels" correspond to "model C", data size "5 kB" and image size "120 pixels" correspond to "model D". Here, the term "model identifier" means an identifier by which to distinguish a group of mobile communication terminals designed on the basis of a specification regarding the display capacity, from another group of mobile communication terminals. In general, the information relating to the model is provided by a manufacturer or a distributor of the mobile communication terminals. An administrator of the mail server 30 may generate the conversion table 332 on the basis of the specification provided by the manufacturer or the distributor.

### 1-2. Operation

### 1-2-1. Storing electronic mail

The description will be given for storing at the mail server 30 an electronic mail transmitted from a mail client to a mobile communication terminal. The source mail client may be a mobile communication terminal 10 or a personal computer 50.

FIG. 5 shows a flowchart illustrating operations described in the control program 331. When the mail server 30 receives an electronic mail (in step S1: Yes), the controller 31 determines whether the electronic mail includes image data (or original image data) (in step S2). When the controller 31 determines that the electronic mail does not include image data (in step S2: No), the controller 31 stores the electronic mail in the mail storage area 333 of the nonvolatile memory 33 (in step S10). Then, the controller 31 terminates the operations.

When the controller 31 determines that the electronic mail includes image data (in step S2: Yes), the controller 31 determines a directory of the image data storage area 334 to store the original image data (in step S3). Then, the controller 31 gives a filename to the original image data in accordance with a predetermined algorithm (in step S4). Then, the controller 31 determines whether the data size of the original image data is larger than a predetermined data size (or a reference data size), 20 kB in this case (in step S5). The data size of the original image data is referred to as "original data size".

In this example, the data size of the original image data is 500 kB. Then, the controller 31 determines that the original data size is larger than the reference data size (in step S5: Yes). Then, the controller 31 converts the image data so that the converted image data has a data size and an image size which are approximately equal to the reference data size and the reference image size, 20 kB and 240 pixels width (in step S6), respectively. The conversion is referred to as a "first conversion". Also, the image data generated by the first conversion is referred to as "intermediate image data". The controller 31 stores the intermediate image data in the directory as determined in step S3. Furthermore, the controller 31 stores the received electronic mail in the mail storage area 333 with information showing correspondence with the intermediate image data (in step S7). When storing the electronic mail, the controller 31 adds to, for example, a header or a footer of the electronic mail a URL that includes the directory.

When the controller 31 determines that the original data size is smaller the reference data size (in step S5: No), the controller 31 checks defects of the image data (in step S8). Then, the controller 31 stores the original image data in the directory. Furthermore, the controller 31 stores the received electronic mail in the mail storage area 333 with information showing correspondence with the original image data (in step S9). When storing the electronic mail, the controller 31 adds to, for example, a header or a footer of the electronic mail a URL that includes the directory.

### 1-2-2. Transmitting electronic mail

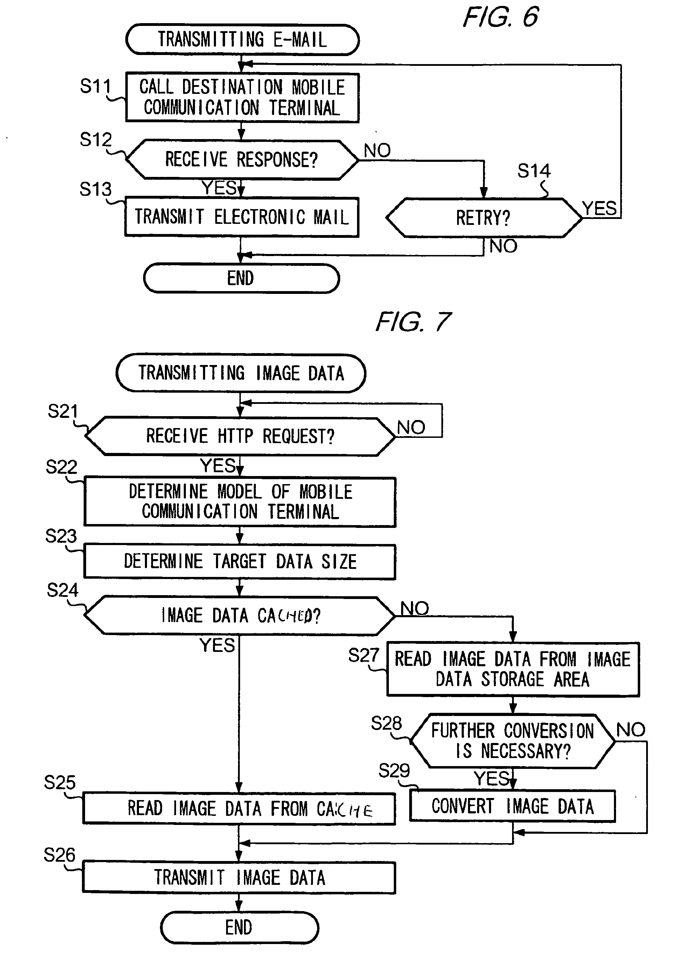

FIG. 6 shows a flow chart illustrating operations of transmitting an electronic mail from the mail server 30 to the mobile communication terminal 10a, the destination.

The controller 31 determines the destination of the electronic mail stored in the mail storage area 333, on the basis of a destination mail address included in the electronic mail. Then, the controller 31 transmits a request to the destination mobile communication terminal (in step S11). When receiving a response from the mobile communication terminal 10a (in step S12: Yes), the controller 31 transmits to the mobile communication terminal 10a via the mobile communication network the electronic mail stored in the mail storage area 333 (in step S 13). When receiving no response from the mobile communication terminal 10a (in step S12: No), the controller 31 determines whether the controller 31 retries the operation in step S11 (in step S 14). For example, if the number of retries is below a predetermined value (in step S 14: Yes), the controller 31 retries the operation in step S11. If the number of retries is above the predetermined value (in step S14: No), the control unit terminates the operation.

### 1-2-3. Transmitting image data

FIG. 7 shows a flow chart illustrating operations of transmitting image data from the mail server 30 to the mobile communication terminal 10a, the destination.

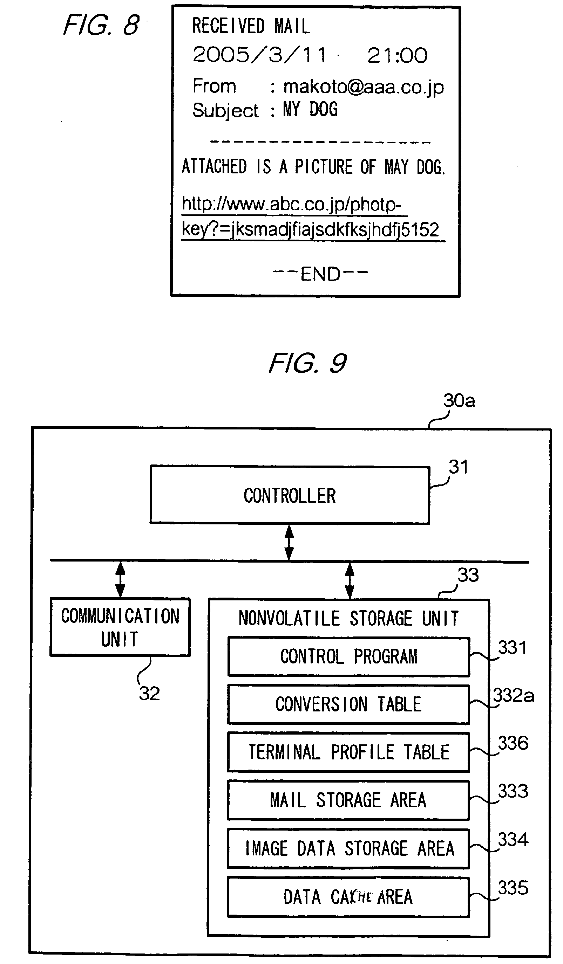

When receiving an electronic mail, the mobile communication terminal 10a notifies a user of receiving the electronic mail by, for example, outputting sound from a speaker. The user operates the mobile communication terminal 10a to open the electronic mail. In response to the operation, the mobile communication terminal 10a displays a screen of the electronic mail as shown in FIG. 8. The URL "http://www.abc.co.jp/photp-key?=jksmadjfiajsdkfksjhdfj5152" shown in FIG. 8 indicates a storage location of the image data attached to the electronic mail. When the user operates the mobile communication terminal 10a to access the URL, the mobile communication terminal 10a generates an HTTP request including the URL. The HTTP request also includes in the User Agent Field a model identifier of the mobile communication terminal 10a. The mobile communication terminal 10a transmits the HTTP request.

When the mail server 30 receives the HTTP request (in step S21 of FIG. 7: Yes), the controller 31 determines the model of the mobile communication terminal 10a, on the basis of the model identifier included in the User Agent Field (in step S22). In this example, the mobile communication terminal 10a is determined to be model B. Then, the controller 31 determines a target data size and a target image size. The target data size and the target image size are a data size and an image size corresponding to the target model, with reference to the conversion table 332 (in step S23). Since the data size and the image size corresponding to the model B is 10 kB and 240 pixels width as shown in FIG. 4, the controller 31 determines the target data size and the target image size to be 10 kB and 240 pixels width.

Then, the controller 31 determines whether the image data having the target data size (10 kB, in this case) is stored in the data cache area 335 (in step S24). When the controller 31 determines that image data having the target data size is stored in the data cache area 335 (in step S24: Yes), the controller 31 reads the image data from the data cache area 335 (in step S25). Then, the controller 31 transmits to the mobile communication terminal 10a an HTTP response including the image data (in step S26).

When the controller 31 determines that image data having the determined data size is not stored in the data cache area 335 (in step S24: No), the controller 31 reads the original image data or the intermediate image data stored in the directory of the image data storage area 334 (in step S27). The storage location of the image data is identified by the URL. Then, the controller 31 determines whether further conversion is necessary for the original image data or the intermediate image data, on the basis of the comparison of the target data size with the original data size or the intermediate data size (in step S28). Specifically, the controller 31 determines that further conversion is necessary in a case that the target data size is smaller than that of the original data size or the intermediate data size. The controller 31 determines that further conversion is not necessary in a case that the target data size is larger than or equal to the original data size or the intermediate data size.

When it is determined that further conversion is necessary (in step S28: Yes), the controller 31 converts the original image data or the intermediate image data into a final image data that has a data size approximately equal to the target data size (in step S29). The controller 31 transmits to the mobile communication terminal 10a an HTTP response including the final image data. Further conversion is referred to as a "second conversion". The image data generated by the second conversion is referred to as "final image data". The data size of the final data size is referred to as "final data size". The controller 31 stores in data cache area 335 the final image data. When it is determined that further conversion is not necessary (in step S28: No), the controller 31 transmits to the mobile communication terminal 10a an HTTP response including the original image data or intermediate image data (in step S26). The mobile communication terminal 10a receives the HTTP response. The mobile communication terminal 10a displays the image in accordance with the image data included in the HTTP response.

According to the first embodiment, the mail server 30 stores one of the original image data and the intermediate image data. The intermediate image data has a data size approximately equal to the reference data size and is generated by the first conversion. The mail server 30 further converts the original image data or the intermediate image data in response to the model of the destination mobile communication terminal, if it is necessary. Therefore, the mail server 30 can use the storage area efficiently. Furthermore, the present embodiment provides significant reduction of processing time for the conversion.

### 2. Second embodiment

In the first embodiment, the reference data size, in other words, the data size of the intermediate image data is constant at 20 kB. According to the first embodiment, the mail server 30 requires further conversion (for example, into 10 kB) in response to the model of the destination mobile communication terminal. Therefore, the first embodiment still requires unnecessary storage area (in the above example, 20 kB - 10 kB = 10 kB). In the second embodiment, the reference data size is a variable that depends on the model of the destination. Thus, the mail server can prevent unnecessary use of the storage area. Specifically, the mail server stores a terminal profile. The terminal profile includes a mail address and a corresponding model identifier. When receiving an electronic mail, the mail server determines a target model corresponding to the destination mail address. Furthermore, the mail server determines a target data size corresponding to the model. When the original data size is larger than that of the reference data size, the mail server converts the original image data into intermediate image data. Furthermore, in the second embodiment, the mail server determines the data size of image data in response to a request by a user of the mobile communication terminal.

### 2-1. Configuration

FIG. 9 shows a block diagram illustrating a configuration of a mail server 30a in accordance with the second embodiment. The differences between the mail server 30a in FIG. 9 and the mail server 30 in FIG. 3 are as follows. First, the mail server 30a stores in nonvolatile storage unit 33 a conversion table 332a instead of the conversion table 332. Second, the mail server 30a further stores in nonvolatile storage unit 33 a terminal profile table 336.

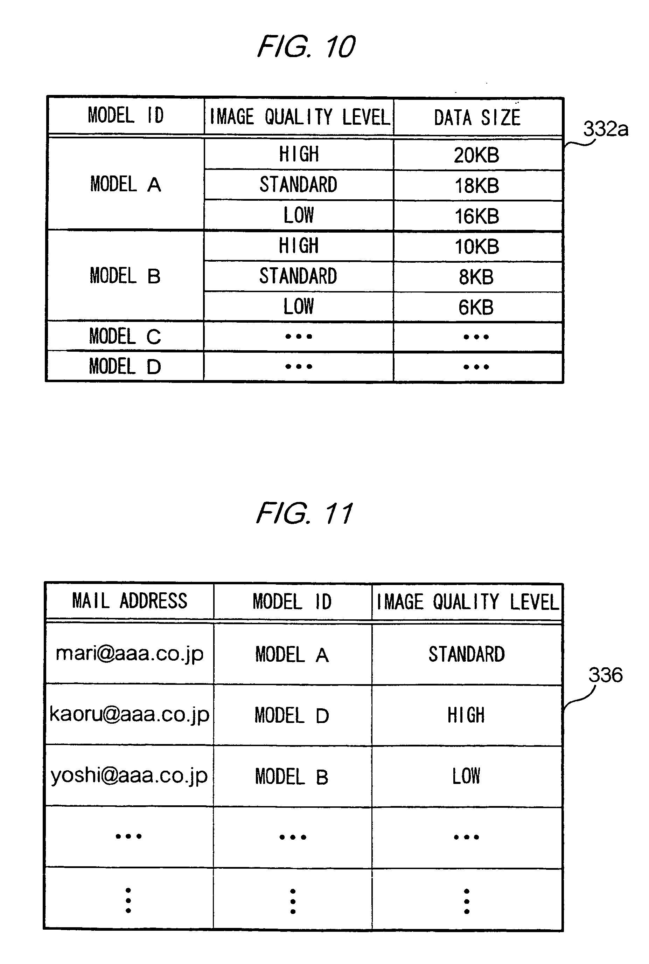

FIG. 10 shows an example of the conversion table 332a. As shown in FIG. 10, the conversion table 332a includes a model identifier of a mobile communication terminal, at least one corresponding image quality level, and at least one corresponding data size of image data. In the example shown in FIG. 10, data size "20 kB" corresponds to "model A" and "high quality", data size "18 kB" corresponds to "model A" and "standard quality", and data size "16 kB" corresponds to "model A" and "low quality". It is to be noted that the corresponding image size is omitted in FIG. 10 for simplifying the descriptions. The conversion table 332a may further include a corresponding image size, similarly to the first embodiment.

FIG. 11 shows an example of the terminal profile table 336. As shown in FIG. 11, the terminal profile table 336 includes a mail address of a mobile communication terminal, a model identifier of the mobile communication terminal, and a corresponding image quality level. In FIG. 11, a mail address "mari@aaa.co.jp" corresponds to "model A" and "standard quality".

A user of a mobile communication terminal may transmit to an administrator of the mail server 30a information of a model of the mobile communication terminal when the user buys the mobile communication terminal. Also, the user may transmit to the administrator a desired image quality level when the user buys the mobile communication terminal. The administrator may operate the mail server 30a to generate the terminal profile table 336 on the basis of the transmitted information. The user may operate the mobile communication terminal 10 to store the desired image quality. When the mobile communication terminal 10 transmits to the mail server 30a an HTTP request to transmit image data, the mobile communication terminal 10 adds the stored image quality level to the header of the HTTP request. The mail server 30a may update the image quality level in the terminal profile table 336.

### 2-2. Operations

### 2-2-1. Storing electronic mail

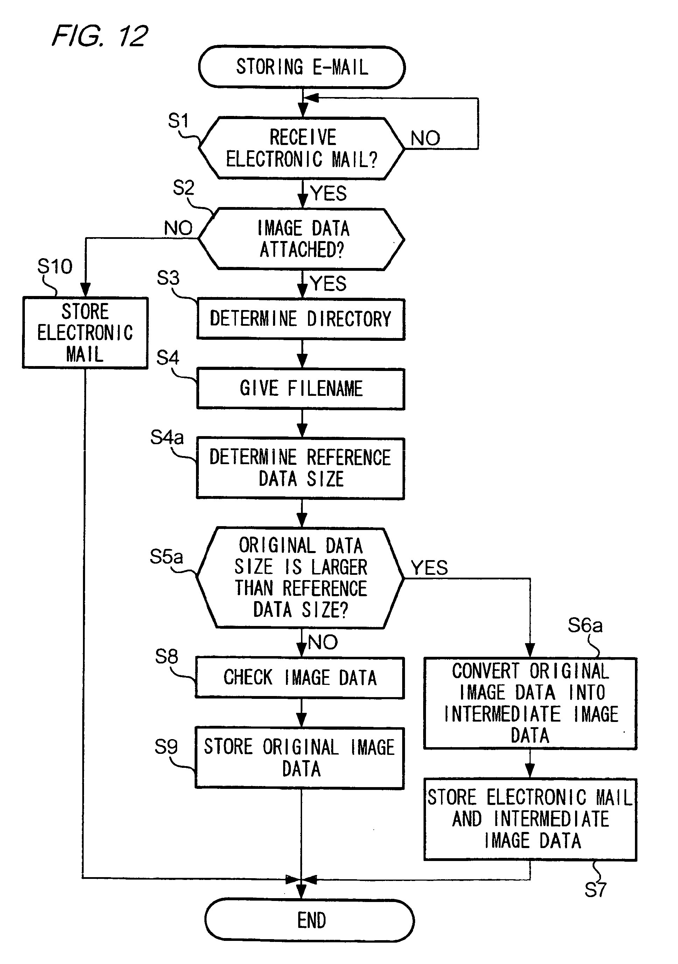

FIG. 12 shows a flowchart illustrating operations of the mail server 30a in accordance with the second embodiment. First, descriptions will be given for storing an electronic mail transmitted from a mail client to a mobile communication terminal 10a. The differences between FIG. 12 and FIG. 5 are steps S4a, S5a, and S6a. The detail of the difference is as follows.

After the controller 31 gives a filename to the image data (in step S4), the controller 31 determines the reference data size that depends on the model of the destination mobile communication terminal (in step S4a). The controller 31 refers to the destination mail address in the electronic mail. Then, the controller 31 extracts from the terminal profile table 336 a reference model and a reference image quality level corresponding to the destination mail address. Furthermore, the controller 31 extracts from the conversion table 332a as the reference data size a data size corresponding to the reference model and the reference image quality level. For example, in a case that the destination mail address is "mari@aaa.co.jp", the controller 31 extracts from the terminal profile table 336 a model "A" and an image quality level "standard" as the reference model and the reference image quality level, and extracts from the conversion table 332a a data size "18 kB" as the reference data size.

Then, the controller 31 determines whether the original data size is larger than the reference data size (in step S5a). When the original data size is larger than the reference data size (in step S5a: Yes), the controller 31 converts the original image data into intermediate image data (in step S6a). The data size of the intermediate image data is equal to the data size determined in step S4a. Then, the controller 31 stores the intermediate image data in the directory determined in step S3. Furthermore, the controller 31 stores in the mail storage area 333 the electronic mail received in step S1 with information showing correspondence with the intermediate image data (in step S7).

When the original data size is smaller than or equal to the reference data size (in step S5a: No), the controller 31 checks defects of the original image data (in step S8). Then, the controller 31 stores the original image data in the directory determined in step S3. Furthermore, the controller 31 stores in the mail storage area 333 the electronic mail received in step S1 with information showing correspondence with the original image data (in step S9).

### 2-2-2. Transmitting electronic mail

The operations of transmitting an electronic mail from the mail server 30a to the mobile communication terminal is similar to those of the first embodiment. Therefore, the descriptions are omitted in the present embodiment.

### 2-2-3. Transmitting image data

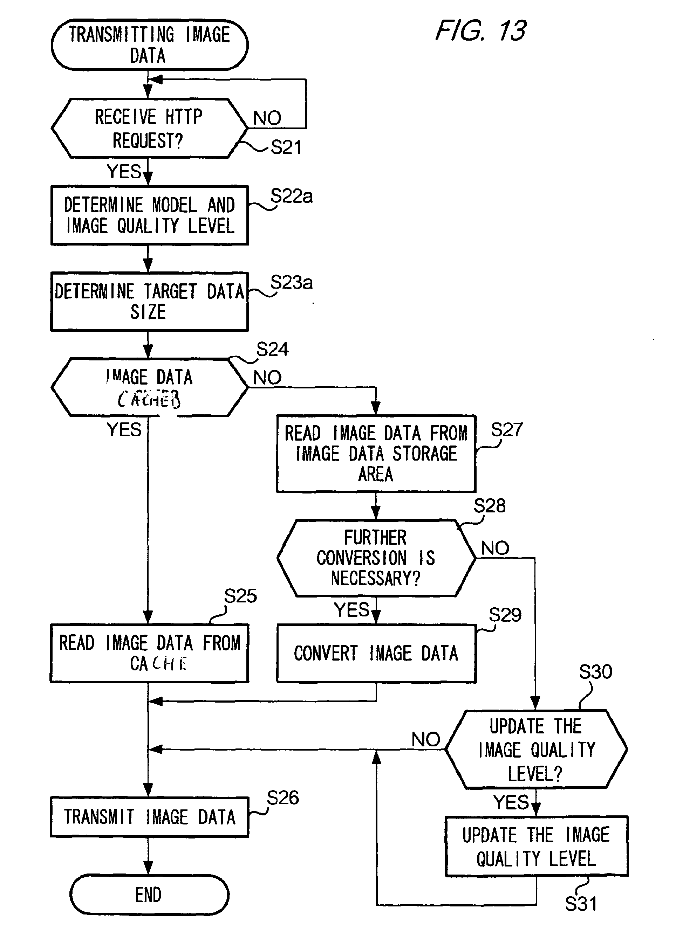

FIG. 13 shows a flow chart illustrating an operation of transmitting image data from the mail server 30 to the mobile communication terminal 10a. The differences between FIG. 13 and FIG. 7 are steps S22a, S23a, S30, and S31. The detail of the difference is as follows.

When receiving an electronic mail, the mobile communication terminal 10a notifies a user of receiving the electronic mail. The user operates the mobile communication terminal 10a to open the electronic mail. In response to the operation, the mobile communication terminal 10a displays a screen of the electronic mail as shown in FIG. 8. When the user operates the mobile communication terminal 10a to access the URL, the mobile communication terminal 10a generates an HTTP request including the URL. The HTTP request also includes in the User Agent Field the stored image quality level as well as a model information showing the model of the mobile communication terminal 10a. The mobile communication terminal 10a transmits the HTTP request.

When the mail server 30a receives the HTTP request (in step S21: Yes), the controller 31 determines the model of the mobile communication terminal and the image quality level with reference to the User Agent Field in the header of the HTTP request (in step S22a). Then, the controller 31 determines a target data size corresponding to the model and the image quality level with reference to the conversion table 332a (in step S23a).

Then, the controller 31 determines whether image data having the target data size is stored in the data cache area 335 (in step S24). When the controller 31 determines that image data having the target data size is stored in the data cache area 335 (in step S24: Yes), the controller 31 reads the image data from the data cache area 335 (in step S25). The controller 31 transmits an HTTP response including the image data (in step S26).

When the controller 31 determines that image data having the target data size is not stored in the data cache area 335 (in step S24: No), the controller 31 reads the original image data or the intermediate image data from the directory in the image storage area 334 (in step S27). The directory is shown by the URL. Then, the controller 31 determines whether further conversion is necessary for the original image data or the intermediate image data, on the basis of the comparison of the target data size with the original data size or the intermediate data size (in step S28). When it is determined that further conversion is necessary (in step S28: Yes), the controller 31 converts the original image data or the intermediate image data into a final image data that has a data size approximately equal to the target data size (in step S29). The controller 31 transmits to the mobile communication terminal 10a an HTTP response including the final image data (in step S26).

When it is determined that further conversion is not necessary (in step S28: No), the controller 31 determines whether it is necessary to update the image quality level included in the terminal profile table 336 (in step S30). When the target data size is larger than the original data size or the intermediate data size, the controller 31 determines that the update is necessary. In other words, the controller determines that the update is necessary in a case that the user of the mobile communication terminal requires the image to have a higher quality than that included in the terminal profile table 336. When it is determined that the update is necessary (in step S30: Yes), the controller 31 updates the image quality level included in the terminal profile table 336 (in step S31). Then, the controller 31 transmits to the mobile communication terminal 10a an HTTP response including the original image data or the intermediate image data (in step S26). Since the image quality level in the terminal profile table 336 is updated, the mail server 30a can transmit to the mobile communication terminal, image data having an image quality level that the user desires.

According to the second embodiment, the mail server transmits to the mobile communication terminal, image data having an image quality level (or data size of the image data) that the user desires.

### 3. Modifications

The present invention is not restricted to the embodiments described above.

A group of devices may function as the mail server 30 or 3Oa described above. Also, the mobile communication terminals may have more than three models. The models of the mobile communication terminals may correspond to carriers providing mobile communication services. The mail server 30 or 30a may transmit image data in the minimum size, from a mobile communication terminal of one carrier to that of another carrier. In the first embodiment, descriptions are given for an example in which the reference data size is constant at 20 kB, but the constant value is not restricted to 20 kB.

In the second embodiment, the mail server 30a may transmit an electronic mail to multiple addresses (or destinations). In this case, the controller 31 may extract from the terminal profile table 336 a plurality of reference models and reference image quality levels, each of which corresponds to each of the multiple mail addresses. Then, the controller 31 may extract from the conversion table 332a the largest data size among the data sizes corresponding to a plurality of models and image quality levels, as the reference data size. Thus, the controller 31 may process the image data on the basis of the image data having the largest size among the data sizes corresponding to the multiple destinations.

The program executed in the mail server 30 or 30a may be stored in a magnetic tape, a magnetic disk, a floppy ™ disc, an optical disk, a magnetooptical disk, a DVD (Digital Versatile Disk), a RAM (Random Access Memory), or other storage devices. The controller 31 may read the program from the storage device and execute it.

## Claims

1. A mail server (30), comprising:
first storage means (301) that stores a model identifier and a target data size corresponding to the model, the model identifier showing a model of a mobile communication terminal;
receiving means (302) that receives an electronic mail and original image data, the electronic mail including a mail address of a destination mobile communication terminal, the original image data being image data attached to the electronic mail;
***characterized by***
first converting means (303) that converts the original image data into intermediate image data when data size of the original image data is larger than a reference data size being a predetermined constant which is the largest data size among data sizes available in the models of mobile communication terminals or a variable data size depending on a destination mobile communication terminal, the intermediate image data having a data size equal to the reference data size;
second storage means (301) that stores the electronic mail, and stores the corresponding intermediate image data generated on the basis of the original image data if the first converting means converts the original image data into the intermediate image data or stores the original image data if the first converting means does not convert the original image data into the intermediate image data;
mail transmitting means that transmits to the destination mobile communication terminal the electronic mail stored in the second storage means;
first determining means (305) that determines a target model on the basis of a model identifier transmitted from the destination mobile communication terminal, the target model being a model of the destination mobile communication terminal;
second determining means (305) that determines the target data size corresponding to the target model, the target data size being selected from target data sizes stored in the first storage means;
second converting means (303) that executes a second conversion of the original image data or the intermediate image data stored in the second storage means into final image data
when the target data size is smaller than the size of the original image data or the intermediate image data stored in the second storage means (301), the final image data having a data size the same as the target data size; and
image transmitting means (304) that transmits the final image data when the second conversion is executed or the image data stored in the second storage means (301) when the second conversion is not executed.

2. A mail server according to claim 1, wherein the first storage means (301) further stores at least one image quality level corresponding to the model, the data size corresponding to the image quality level;
the mail server further includes third storage means (336) that stores a mail address of a mobile communication terminal, a model identifier showing a model of the mobile communication terminal, and an image quality level corresponding to the mail address;
the mail server further includes a first extracting means (331) that extracts from the third storage means a reference model identifier and a reference image quality level, the reference model identifier and the reference image quality level corresponding to the mail address included in the electronic mail;
the mail server further includes a second extracting means (331) that extracts from the first storage means the reference data size, the reference data size being a data size corresponding to the target model identifier and the target image quality level;
the first determining means (305) further determines a target image quality level, the target image quality level corresponding to the target model; and
the second determining means (305) further determines a target data size, the target data size corresponding to the target model and the target image quality level.

3. A mail server according to claim 2, further comprising updating means (331) that updates the image quality level stored in the third storage means with an image quality level transmitted from the destination mobile communication terminal when the target data size is larger than the data size of the original image data or intermediate image data.

4. A mail server according to claim 2, wherein the electronic mail includes a plurality of mail addresses as destinations;
the first extracting means (331) extracts a plurality of models and image quality levels, each of which corresponds to one of a plurality of mail addresses; and
the second extracting means (331) extracts the largest data size among data sizes corresponding to a plurality of models and image quality levels extracted by the first extracting means.

5. A mail server according to claim 1, wherein the first storage means (301) further stores an image size corresponding to the model;
the intermediate image data has a predetermined image size;
the second determining means further determines the target image size, the target image size corresponding to the target model; and
the final image data has a data size equal to the target image size.

6. A mail server according to claim 1, further comprising cache storage means (335) that stores the final image data; wherein
the image transmitting means (304) transmits the final image data stored in the cache storage means (335) in a case that the image data to be transmitted to the destination mobile communication terminal is stored in the cache storage means.

7. A method for transmitting an electronic mail by a mail server including first storage means (301) that stores a model identifier and a data size corresponding to the model, the model identifier showing a model of a mobile communication terminal, the method comprising:
receiving (S1) an electronic mail and original image data, the electronic mail including a mail address of a destination mobile communication terminal, the original image data being image data attached to the electronic mail;
converting (S6) the original image data into intermediate image data when data size of the image data is larger than a reference data size being a predetermined constant which is the largest data size among data sizes available in the models of mobile communication terminals, the intermediate image data having a data size equal to the reference data size;
storing (S7) in second storage means the electronic mail, and storing only the corresponding intermediate data generated on the basis of the original image data if the first converting means converts the original image data into the intermediate image data or storing the original image data if the first converting means does not convert the original image data into the intermediate image data;
transmitting to the destination mobile communication terminal the electronic mail stored in the second storage means;
determining (S22) a target model on the basis of a model identifier transmitted from the destination mobile communication terminal, the target model being a model of the destination mobile communication terminal;
determining (S23) a target data size corresponding to the target model, the target data size being selected from data sizes stored in the first storage means;
executing (S29) a second conversion of the original image data stored in second storage means or the intermediate image data into final image data when the target data size is smaller than the data size of the original image data or the intermediate image data, the final image data having a data size the same as the target data size; and
transmitting (S26) the final image data when the second conversion is executed or the image data stored in the second storage means when the second conversion is not executed.

## Patentansprüche

1. Mailserver (30), welcher umfasst:
ein erstes Speichermittel (301), welches einen Modell-Identifikator und eine Zieldatengröße speichert, welche dem Modell entspricht, wobei der Modell-Identifikator ein Modell eines Mobilkommunikationsendgeräts zeigt;
ein Empfangsmittel (302), welches eine elektronische Mail und originale Bilddaten empfängt, wobei die elektronische Mail eine Mailadresse eines Ziel-Mobilkommunikationsendgeräts beinhaltet, wobei die originalen Bilddaten Bilddaten sind, welche der elektronischen Mail angefügt sind;
**gekennzeichnet durch**
ein erstes Konvertiermittel (303), welches die originalen Bilddaten in Zwischenbilddaten konvertiert, wenn eine Datengröße der originalen Bilddaten größer als eine Referenzdatengröße ist, welche eine vorbestimmte Konstante ist, welches die größte Datengröße unter Datengrößen ist, welche in den Modellen von Mobilkommunikationsendgeräten verfügbar sind, oder eine variable Datengröße, abhängig von einem Ziel-Mobilkommunikationsendgerät, wobei die Zwischenbilddaten eine Datengröße aufweisen, welche gleich der Referenzdatengröße ist;
ein zweites Speichermittel (301), welches die elektronische Mail speichert und die entsprechenden Zwischenbilddaten speichert, welche auf der Basis der originalen Bilddaten erzeugt werden, falls das erste Konvertiermittel die originalen Bilddaten in die Zwischenbilddaten konvertiert oder die originalen Bilddaten speichert, falls das erste Konvertiermittel die originalen Bilddaten nicht in die Zwischenbilddaten konvertiert;
ein Mailübertragemittel, welches an das Ziel-Mobilkommunikationsendgerät die elektronische Mail überträgt, welche in dem zweiten Speichermittel gespeichert ist;
ein erstes Bestimmmittel (305), welches ein Zielmodell auf der Basis eines Modell-Identifikators bestimmt, welcher aus dem Ziel-Mobilkommunikationsendgerät übertragen wird, wobei das Zielmodell ein Modell des Ziel-Mobilkommunikationsendgeräts ist;
ein zweites Bestimmmittel (305), welches die Zieldatengröße bestimmt, welche dem Zielmodell entspricht, wobei die Zieldatengröße aus Zieldatengrößen gewählt wird, welche in dem ersten Speichermittel gespeichert sind;
ein zweites Konvertiermittel (303), welches eine zweite Konvertierung der originalen Bilddaten oder der Zwischenbilddaten, welche in dem zweiten Speichermittel gespeichert werden, in Endbilddaten ausführt, wenn die Zieldatengröße kleiner als die Größe der originalen Bilddaten oder der Zwischenbilddaten ist, welche in dem zweiten Speichermittel (301) gespeichert werden, wobei die Endbilddaten eine Datengröße gleich der Zieldatengröße aufweisen; und
Bildübertragungsmittel (304), welches die Endbilddaten überträgt, wenn die zweite Konvertierung ausgeführt wird oder die Bilddaten, welche in dem zweiten Speichermittel (301) gespeichert werden, wenn die zweite Konvertierung nicht ausgeführt wird.

2. Mailserver nach Anspruch 1, wobei das erste Speichermittel (301) ferner wenigstens einen Bildqualitätspegel speichert, welcher dem Modell entspricht, wobei die Datengröße dem Bildqualitätspegel entspricht;
der Mailserver ferner ein drittes Speichermittel (336) beinhaltet, welcher eine Mailadresse eines Mobilkommunikationsendgeräts, einen Modell-Identifikator, welcher ein Modell des Mobilkommunikationsendgeräts zeigt, und einen Bildqualitätspegel, welcher der Mailadresse entspricht, speichert;
der Mailserver ferner ein erstes Extraktionsmittel (331) beinhaltet, welches aus dem dritten Speichermittel einen Referenzmodell-Identifikator und einen Referenzbildqualitätspegel extrahiert, wobei der Referenzmodell-Identifikator und der ReferenzBildqualitätspegel der Mailadresse, welcher in der elektronischen Mail beinhaltet ist, entsprechen;
der Mailserver ferner ein zweites Extraktionsmittel (331) beinhaltet, welches aus dem ersten Speichermittel die Referenzdatengröße extrahiert, wobei die Referenzdatengröße eine Datengröße ist, welche dem Zielmodell-Identifikator und dem Ziel-Bildqualitätspegel entspricht;
das erste Bestimmmittel (305) ferner einen Ziel-Bildqualitätspegel bestimmt, wobei der Ziel-Bildqualitätspegel dem Zielmodell entspricht; und
das zweite Bestimmmittel (305) ferner eine Zieldatengröße bestimmt, wobei die Zieldatengröße dem Zielmodell und dem Ziel-Bildqualitätspegel entspricht.

3. Mailserver nach Anspruch 2, welcher ferner ein Aktualisierungsmittel (331) umfasst, welches den Bildqualitätspegel aktualisiert, welcher in dem dritten Speichermittel gespeichert ist, mit einem Bildqualitätspegel, welcher aus dem Ziel-Mobilkommunikationsendgerät übertragen wird, wenn die Zieldatengröße größer als die Datengröße der Original-Bilddaten oder der Zwischenbilddaten ist.

4. Mailserver nach Anspruch 2, wobei die elektronische Mail eine Vielzahl an Mailadressen als Ziele beinhaltet;
das erste Extraktionsmittel (331) eine Vielzahl an Modellen und Bildqualitätspegeln extrahiert, die jeweils einer aus einer Vielzahl an Mailadressen entsprechen; und
das zweite Extraktionsmittel (331) die größte Datengröße unter Datengröße extrahiert, welche einer Vielzahl an Modellen und Bildqualitätspegeln entsprechen, welche durch das erste Extraktionsmittel extrahiert werden.

5. Mailserver nach Anspruch 1, wobei das erste Speichermittel (301) ferner eine Bildgröße speichert, welche dem Modell entspricht;
die Zwischenbilddaten eine vorbestimmte Bildgröße aufweisen;
das zweite Bestimmmittel ferner die Zielbildgröße bestimmt, wobei die Zielbildgröße dem Zielmodell entspricht; und
die Endbilddaten eine Datengröße aufweisen, welche gleich der Zielbildgröße ist.

6. Mailserver nach Anspruch 1, welcher ferner Cache-Speichermittel (335) umfasst, welches die Endbilddaten speichert, wobei
das Bildübertragungsmittel (304) die Endbilddaten, welche in dem Cache-Speichermittel (335) gespeichert sind, überträgt, falls die Bilddaten, welche an das Ziel-Mobilkommunikationsendgerät übertragen werden sollen, in dem Cache-Speichermittel gespeichert sind.

7. Verfahren zum Übertragen einer elektronischen Mail durch einen Mailserver, welcher ein erstes Speichermittel (301) beinhaltet, welches einen Modell-Identifikator und eine Datengröße speichert, welche dem Modell entspricht, wobei der Modell-Identifikator ein Modell eines Mobilkommunikationsendgeräts zeigt, wobei das Verfahren umfasst:
Empfangen (S1) einer elektronischen Mail und originalen Bilddaten, wobei die elektronische Mail eine Mailadresse eines Ziel-Mobilkommunikationsendgeräts beinhaltet, wobei die originalen Bilddaten Bilddaten sind, welche der elektronischen Mail angehängt sind;
Konvertieren (S6) der originalen Bilddaten in Zwischenbilddaten, wenn eine Datengröße der Bilddaten größer als eine Referenzdatengröße ist, welche eine vorbestimmte Konstante ist, welche die größte Datengröße unter Datengrößen ist, welche in den Modellen von Mobilkommunikationsendgeräten verfügbar sind, wobei die Zwischenbilddatengröße eine Datengröße aufweist, welche gleich der Referenzdatengröße ist;
Speichern (S7), in einem zweiten Speichermittel, der elektronischen Mail, und Speichern nur der entsprechenden Zwischendaten, welche auf der Basis der originalen Bilddaten erzeugt werden, falls das erste Konvertiermittel die originalen Bilddaten in die Zwischenbilddaten konvertiert oder Speichern der originalen Bilddaten falls das erste Konvertiermittel die originalen Bilddaten nicht in die Zwischenbilddaten konvertiert;
Übertragen an das Ziel-Mobilkommunikationsendgerät der elektronischen Mail, welche in dem zweiten Speichermittel gespeichert ist;
Bestimmen (S22) eines Zielmodells auf der Basis eines Modell-Identifikators, welcher aus dem Ziel-Mobilkommunikationsendgerät übertragen wird, wobei das Zielmodell ein Modell des Ziel-Mobilkommunikationsendgeräts ist;
Bestimmen (S23) einer Zieldatengröße, welche dem Zielmodell entspricht, wobei die Zieldatengröße aus Datengrößen gewählt wird, welche in dem ersten Speichermittel gespeichert sind;
Ausführen (S29) einer zweiten Konvertierung der originalen Bilddaten, welche in dem zweiten Speichermittel gespeichert sind, oder der Zwischenbilddaten zu Endbilddaten, wenn die Zieldatengröße kleiner als die Datengröße der Original-Bilddaten oder der Zwischenbilddaten ist, wobei die Endbilddaten eine Datengröße aufweisen, welche gleich der Zieldatengröße ist; und
Übertragen (S26) der Endbilddaten, wenn die zweite Konvertierung ausgeführt wird, oder der Bilddaten, welche in dem zweiten Speichermittel gespeichert werden, wenn die zweite Konvertierung nicht ausgeführt wird.

## Revendications

1. Serveur de courrier (30), comprenant :
un premier moyen de stockage (301) qui stocke un identificateur de modèle et une taille de données cible correspondant au modèle, l'identificateur de modèle montrant un modèle d'un terminal de communication mobile ;
un moyen de réception (302) qui reçoit un courrier électronique et des données d'image originales, le courrier électronique incluant une adresse de courrier d'un terminal de communication mobile de destination, les données d'image originales étant des données d'image attachées au courrier électronique ;
***caractérisé par***
un premier moyen de conversion (303) qui convertit les données d'image originales en données d'image intermédiaires quand une taille de données des données d'image originales est plus grande qu'une taille de données de référence étant une constante prédéterminée qui est la taille de données la plus grande parmi des tailles de données disponibles dans les modèles de terminaux de communication mobiles ou une taille de données variable en fonction d'un terminal de communication mobile de destination, les données d'image intermédiaires ayant une taille de données égale à la taille de données de référence ;
un deuxième moyen de stockage (301) qui stocke le courrier électronique, et qui stocke les données d'image intermédiaires correspondantes produites sur la base des données d'image originales si le premier moyen de conversion convertit les données d'image originales en données d'image intermédiaires ou qui stocke les données d'image originales si le premier moyen de conversion ne convertit pas les données d'image originales en données d'image intermédiaires ;
un moyen de transmission de courrier qui transmet au terminal de communication mobile de destination le courrier électronique stocké dans le deuxième moyen de stockage ;
un premier moyen de détermination (305) qui détermine un modèle cible sur la base d'un identificateur de modèle transmis depuis le terminal de communication mobile de destination, le modèle cible étant un modèle du terminal de communication mobile de destination ;
un second moyen de détermination (305) qui détermine la taille de données cible correspondant au modèle cible, la taille de données cible étant sélectionnée à partir de tailles de données cibles stockées dans le premier moyen de stockage ;
un second moyen de conversion (303) qui exécute une seconde conversion des données d'image originales ou des données d'image intermédiaires stockées dans le deuxième moyen de stockage en données d'image finales quand la taille de données cible est plus petite que la taille des données d'image originales ou des données d'image intermédiaires stockées dans le deuxième moyen de stockage (301), les données d'image finales ayant une taille de données qui est la même que la taille de données cible ; et
un moyen de transmission d'image (304) qui transmet les données d'image finales quand la seconde conversion est exécutée ou les données d'image stockées dans le deuxième moyen de stockage (301) quand la seconde conversion n'est pas exécutée.

2. Serveur de courrier selon la revendication 1, dans lequel le premier moyen de stockage (301) stocke en outre au moins un niveau de qualité d'image correspondant au modèle, la taille de données correspondant au niveau de qualité d'image ;
le serveur de courrier inclut en outre un troisième moyen de stockage (336) qui stocke une adresse de courrier d'un terminal de communication mobile, un identificateur de modèle représentant un modèle du terminal de communication mobile, et un niveau de qualité d'image correspondant à l'adresse de courrier ;
le serveur de courrier inclut en outre un premier moyen d'extraction (331) qui extrait du troisième moyen de stockage un identificateur de modèle de référence et un niveau de qualité d'image de référence, l'identificateur de modèle de référence et le niveau de qualité d'image de référence correspondant à l'adresse de courrier incluse dans le courrier électronique ;
le serveur de courrier inclut en outre un second moyen d'extraction (331) qui extrait du premier moyen de stockage la taille de données de référence, la taille de données de référence étant une taille de données correspondant à l'identificateur de modèle cible et au niveau de qualité d'image cible ;
le premier moyen de détermination (305) détermine en outre un niveau de qualité d'image cible, le niveau de qualité d'image cible correspondant au modèle cible ; et
le second moyen de détermination (305) détermine en outre une taille de données cible, la taille de données cible correspondant au modèle cible et au niveau de qualité d'image cible.

3. Serveur de courrier selon la revendication 2, comprenant en outre un moyen de mise à jour (331) qui met à jour le niveau de qualité d'image stocké dans le troisième moyen de stockage par un niveau de qualité d'image transmis depuis le terminal de communication mobile de destination quand la taille de données cible est plus grande que la taille de données des données d'image originales ou des données d'image intermédiaires.

4. Serveur de courrier selon la revendication 2, dans lequel le courrier électronique inclut une pluralité d'adresses de courrier en tant que destinations ;
le premier moyen d'extraction (331) extrait une pluralité de modèles et de niveaux de qualité d'image, chacun d'eux correspondant à l'une d'une pluralité d'adresses de courrier ; et
le second moyen d'extraction (331) extrait la taille de données la plus grande parmi des tailles de données correspondant à une pluralité de modèles et de niveaux de qualité d'image extraits par le premier moyen d'extraction.

5. Serveur de courrier selon la revendication 1, dans lequel le premier moyen de stockage (301) stocke en outre une taille d'image correspondant au modèle ;
les données d'image intermédiaires ont une taille d'image prédéterminée ;
le second moyen de détermination détermine en outre la taille d'image cible, la taille d'image cible correspondant au modèle cible ; et
les données d'image finales ont une taille de données égale à la taille d'image cible.

6. Serveur de courrier selon la revendication 1, comprenant en outre un moyen de mémoire cache (335) qui stocke les données d'image finales ; dans lequel
le moyen de transmission d'image (304) transmet les données d'image finales stockées dans le moyen de mémoire cache (335) dans un cas où les données d'image à transmettre au terminal de communication mobile de destination sont stockées dans le moyen de mémoire cache.

7. Procédé pour transmettre un courrier électronique par un serveur de courrier incluant un premier moyen de stockage (301) qui stocke un identificateur de modèle et une taille de données correspondant au modèle, l'identificateur de modèle représentant un modèle d'un terminal de communication mobile, le procédé comprenant :
la réception (S1) d'un courrier électronique et de données d'image originales, le courrier électronique incluant une adresse de courrier d'un terminal de communication mobile de destination, les données d'image originales étant des données d'image attachées au courrier électronique ;
la conversion (S6) des données d'image originales en données d'image intermédiaires quand une taille de données des données d'image est plus grande qu'une taille de données de référence étant une constante prédéterminée qui est la taille de données la plus grande parmi des tailles de données disponibles dans les modèles de terminaux de communication mobiles, les données d'image intermédiaires ayant une taille de données égale à la taille de données de référence ;
le stockage (S7) dans un deuxième moyen de stockage du courrier électronique, et le stockage des seules données intermédiaires correspondantes produites sur la base des données d'image originales si le premier moyen de conversion convertit les données d'image originales en données d'image intermédiaires ou le stockage des données d'image originales si le premier moyen de conversion ne convertit pas les données d'image originales en données d'image intermédiaires ;
la transmission au terminal de communication mobile de destination du courrier électronique stocké dans le deuxième moyen de stockage ;
la détermination (S22) d'un modèle cible sur la base d'un identificateur de modèle transmis à partir du terminal de communication mobile de destination, le modèle cible étant un modèle du terminal de communication mobile de destination ;
la détermination (S23) d'une taille de données cible correspondant au modèle cible, la taille de données cible étant sélectionnée à partir de tailles de données stockées dans le premier moyen de stockage ;
l'exécution (S29) d'une seconde transformation des données d'image originales stockées dans le deuxième moyen de stockage ou des données d'image intermédiaires en données d'image finales quand la taille de données cible est plus petite que la taille de données des données d'image originales ou des données d'image intermédiaires, les données d'image finales ayant une taille de données qui est la même que la taille de données cible ; et
la transmission (S26) des données d'image finales quand la seconde conversion est exécutée ou des données d'image stockées dans le deuxième moyen de stockage quand la seconde conversion n'est pas exécutée.
